# EUROPÄISCHE PATENTSCHRIFT

(11) **EP 0 535 183 B1**
(45) Veröffentlichungstag und Bekanntmachung des Hinweises auf die Patenterteilung: **15.11.1995**
(21) Anmeldenummer: 92906941.7
(22) Anmeldetag: 25.03.1992
(51) Int. Cl.: F02M 25/08

(54) **VERFAHREN UND VORRICHTUNG ZUM ÜBERPRÜFEN DER FUNKTIONSFÄHIGKEIT EINER TANKENTLÜFTUNGSANLAGE**
PROCESS AND DEVICE FOR MONITORING THE PERFORMANCE OF A FUEL TANK VENTILATION SYSTEM
PROCEDE ET DISPOSITIF POUR SURVEILLER LE FONCTIONNEMENT D'UN SYSTEME D'AERATION DE RESERVOIR DE CARBURANT

(30) Priorität: 17.04.1991 DE 4112481
(43) Veröffentlichungstag der Anmeldung: 07.04.1993
(73) Patentinhaber: ROBERT BOSCH GMBH, 70442 Stuttgart (DE)
(72) Erfinder: DENZ, Helmut, D-7000 Stuttgart 1 (DE); BLUMENSTOCK, Andreas, D-7140 Ludwigsburg (DE)
(86) Internationale Anmeldenummer: DE9200244
(87) Internationale Veröffentlichungsnummer: WO9218765

(56) Entgegenhaltungen:
- EP-A- 0 411 173
- WO-A-91/12426
- WO-A-91/16216
- FR-A- 2 635 823

## Beschreibung

Das Folgende betrifft ein Verfahren und eine Vorrichtung zum Überprüfen der Funktionsfähigkeit einer Tankentlüftungsanlage für ein Kraftfahrzeug mit einem Verbrennungsmotor mit Lambdaregler.

### Stand der Technik

Es ist bekannt, die Funktionsfähigkeiteit einer Tankentlüftungsanlage dadurch zu überprüfen, daß beim Betreiben eines Verbrennungsmotors mit Lambdaregler bei niederer Last untersucht wird, ob aufgrund des ihm aus der Tankentlüftungsanlage zugeführten Gases eine Magerkorrektur durch den Lambdaregler erforderlich ist. Dieses Verfahren ist insofern unzuverlässig, als es durchaus möglich ist, daß der im Tank befindliche Kraftstoff kaum gast, was zur Folge hat, daß beim Regenerieren des Adsorptionsfilters der Anlage die durch dieses Filter gesaugte Luft nicht mit Kraftstoff beladen wird, weswegen dann der Lambdaregler eine Korrektur in Richtung Fett vornehmen muß, um der aus der Tankentlüftungsanlage zugeführten Luft Kraftstoff zuzusetzen.

Die Kalifornische Umweltbehörde (CARB) hat daher im Rahmen eines Pflichtenhefts im Jahr 1989 vorgeschlagen, mit Hilfe eines Füllstandssensors und eines Temperaturfühlers im Tank zu ermitteln, ob das Kraftfahrzeug, an dem die Anlage angebracht ist, betankt wurde und ob der getankte Kraftstoff so warm ist, daß ein Gasen desselben vermutet werden kann. Wenn die Signale von diesen Meßfühlern im Tank anzeigen, daß ein Zustrom von Kraftstoffdampf in die Tankentlüftungsanlage zu erwarten ist, aber dennoch keine Magerkorrektur durch den Lambdaregler festgestellt wird, ist dies als Zeichen für Funktionsunfähigkeit des Tanks zu werten. Dieses Verfahren hat den Nachteil, daß dann, wenn die Temperatur, ab der Gasen des Kraftstoffs vermutet wird, relativ hoch gewählt wird, bei kalter Witterung und damit kaltem Kraftstoff über längere Zeitspannen keine Untersuchung auf Funktionsfähigkeit ausgeführt werden kann. Wird die genannte Temperaturschwelle niedriger angesetzt, besteht die Gefahr, daß es zu einer Fehlaussage betreffend die Funktionsfähigkeit der Anlage kommt, wenn nämlich kein Kraftstoffdampf entweicht, da im wesentlichen ausgegaster Kraftstoff getankt wurde. Es wird dann fälschlicherweise aufgrund der Meßdaten der Fühler im Tank ein Gasen des Kraftstoffs angenommen, ein solches liegt aber tatsächlich nicht vor, und demgemäß kann auch vom Lambdaregler keine Magerkorrektur vorgenommen werden.

In der älteren Anmeldung WO 91/12426 ist eine Tankentlüftungsanlage beschrieben, die einen Differenzdruckfühler am Tank und ein Adsorptionsfilter mit sperrbarer Belüftungsleitung aufweist. Um Funktionsfähigkeit des Tanks zu überprüfen, wird die genannte Belüftungsleitung gesperrt, und dann wird bei geöffnetem Tankentlüftungsventil untersucht, ob sich im Tank ein Unterdruck gegenüber dem Umgebungsdruck aufbaut. Ist dies der Fall, wird die Anlage als funktionsfähig beurteilt. In einer Ausgestaltung des Verfahrens ist vorgesehen, dann beim öffnen des Tankentlüftungsventils auf eine Magerkorrektur durch den Lambdaregler zu prüfen, wenn zuvor, also bei noch geschlossenem Tankentlüftungsventil, ein Überdruck im Tank festgestellt wurde.

In einer anderen älteren Anmeldung (DE-A-41 09 401) ist ein Verfahren zum Überprüfen der Funktionsfähigkeit einer Tankentlüftungsanlage beschrieben, gemäß dem bei offenem Tankentlüftungsventil gleichzeitig untersucht wird, ob vom Lambdaregler eine Magerkorrektur vorgenommen wird und ob ein Tankdifferenzdruck festgestellt wird, der größer ist als eine vorgegebene Schwelle. Wenn mindestens eine der beiden Bedingungen erfüllt ist, wird die Anlage als funktionsfähig beurteilt.

Trotz dieser bekannten und vorgeschlagenen Tankentlüftungsanlagen und Verfahren und Vorrichtungen zum Überprüfen der Funktionsfähigkeit derselben bestand weiterhin der Wunsch verbesserte derartige Verfahren und Vorrichtungen anzugeben.

### Darstellung der Erfindungen

Das erfindungsgemäße Verfahren zum Überprüfen der Funktionsfähigkeit einer Tankentlüftungsanlage für ein Kraftfahrzeug mit einem Verbrennungsmotor mit Lambdaregler, welche Anlage ein Adsorptionsfilter mit einer Anschlußleitung zu einem Tank und einer Verbindungsleitung mit eingesetztem Tankentlüftungsventil zum Saugrohr des Motors aufweist, ist dadurch gekennzeichnet, daß sobald ein Betriebszustand mit niederem Luftdurchsatz durch den Motor vorliegt, eine Magerkorrekturprüfung vorgenommen wird, und dann, wenn dabei eine Lambdaregler-Magerkorrektur (ΔFR) festgestellt wird, die kleiner ist als ein vorgegebener Magerkorrektur-Schwellwert (ΔFR_SW) eine Druckänderungsprüfung betreffend den Druck im Tank vorgenommen wird, sobald ein Betriebszustand mit hohem Luftdurchsatz durch das Tankentlüftungsventil vorliegt, und die Tankentlüftungsanlage als funktionsfähig beurteilt wird, wenn ein Druckänderungseffekt vorgegebener Qualität (ΔDp > ΔDp_SW) festgestellt wird.

Die erfindungsgemäße Vorrichtung zum Überprüfen der Funktionsfähigkeit einer Tankentlüftungsanlage ist so ausgebildet, daß sie die vorstehenden, das Verfahren kennzeichnenden Merkmale ausübt und ein Beurteilungssignal mit zwei Zuständen ausgibt, wobei der eine Zustand Funktionsfähigkeit und der andere fehlende Funktionsfähigkeit der Anlage anzeigt.

Eine wesentliche Eigenschaft des erfindungsgemäßen Verfahrens ist es, daß die Tankdruckänderungsprüfung nur ausgeführt wird, wenn die Magerkorrekturprüfung angezeigt hat, daß wenig Kraftstoff zu regenerieren ist. Es steht dann fest, daß der Eingriff in den Regenerierablauf durch das willkürliche Schließen des Tankentlüftungsventils bei der Druckänderungsprüfung ohne merkbare Folgen auf das Regenerierergebnis bleibt.

Das Verfahren läuft vorzugsweise so ab, daß mit dem Ergebnis der Magerkorrekturprüfung nur entschieden wird, ob die Druckänderungsprüfung ausgeführt werden soll oder nicht, und diese dann, wenn sie ausgeführt wird, die alleinige Entscheidung fällt, ob die Anlage funktionsfähig ist oder nicht. Einfacher ist jedoch ein Verfahren, bei dem bei merkbarer Magerkorrektur sogleich auf Funktionsfähigkeit der Anlage geschlossen wird und die Druckänderungsprüfung nur ausgeführt wird, wenn mit Hilfe der Magerkorrekturprüfung noch keine Entscheidung gefällt werden konnte.

Ergibt sich bei der Tankdruckänderungsprüfung, daß der Tankdruckänderungseffekt die vorgegebene Qualitätsbedingung nicht erfüllt, wird gemäß einer Ausführungsform die Anlage als funktonsunfähig beurteilt. Dieser unmittelbare Schluß ist bei einer Kombination eines Verbrennungsmotors und einer Tankentlüftungsanlage möglich, bei der deutliche Druckänderungseffekte auftreten. Andernfalls ist es vorteilhafter, nochmals eine Magerkorrekturprüfung vorzunehmen, jedoch nur dann, wenn ein Betriebszustand mit niederem Luftdurchsatz durch den Motor innerhalb einer vorgegebenen Zeitspanne nach der Druckänderungsprüfung erreicht wird. Wurde bei der letzten Druckänderungsprüfung die vorgegebene Qualitätsbedingung nicht erfüllt, kann dies darauf beruhen, daß der Kraftstoff im Tank stark gast. Es muß dann Kraftstoffdampf im Adsorptionsfilter adsorbiert werden. Wird mit dem Ende der Druckänderungsprüfung das Tankentlüftungsventil geschlossen, muß dieser adsorbierte Kraftstoff im Adsorptionsfilter verbleiben, so daß er bei einer Magerkorrekturprüfung festgestellt werden kann. Da jedoch bei geschlossenem Tankentlüftungsventil keine Tankentlüftung stattfinden kann, wird auf die Möglichkeit der Magerkorrekturprüfung bei niederen Luftdurchsätzen durch den Motor nicht unbegrenzt lange gewartet werden, sondern nur für eine vorgegebene Zeitspanne nach dem Ende der letzten Druckänderungsprüfung.

Um für die Druckmessungen möglichst zuverlässige Werte zu erhalten, ist es von Vorteil, nach jeder Änderung des öffnungszustandes des Tankentlüftungsventils zunächst die Einstellung eines Druckgleichgewichts innerhalb einer vorgegebenen Zeitspanne abzuwarten. Erst dann wird der dem jeweiligen öffnungszustand des Tankentlüftungsventils zugeordnete Druck gemessen. Vorzugsweise ist der gemessene Druck der Differenzdruck zwischen dem Tankinnendruck und dem Umgebungsdruck.

### Zeichnung

Fig. 1: schematische Darstellung einer Tankentlüftungsanlage mit Vorrichtung zum Überprüfen der Funktionsfähigkeit derselben;
Fig. 2: Flußdiagramm zum Beschreiben eines Ausführungsbeispiels eines Verfahrens zum Überprüfen der Funktionsfähigkeit einer Tankentlüftungsanlage;
Fig. 3: Flußdiagramm betreffend eine Änderung der Druckdifferenzprüfung im Flußdiagramm von Fig. 2;
Fig. 4: Flußdiagramm zum Beschreiben von Verfahrensschritten, die in vorteilhafter Weise zusätzlich zu denen des Flußdiagramms von Fig. 2 ausgeführt werden; und
Fig. 5: Flußdiagramm betreffend eine Änderung der Auswirkung der Magerkorrekturprüfung im Flußdiagramm von Fig. 2.

### Beschreibung von Ausführungsbeispielen

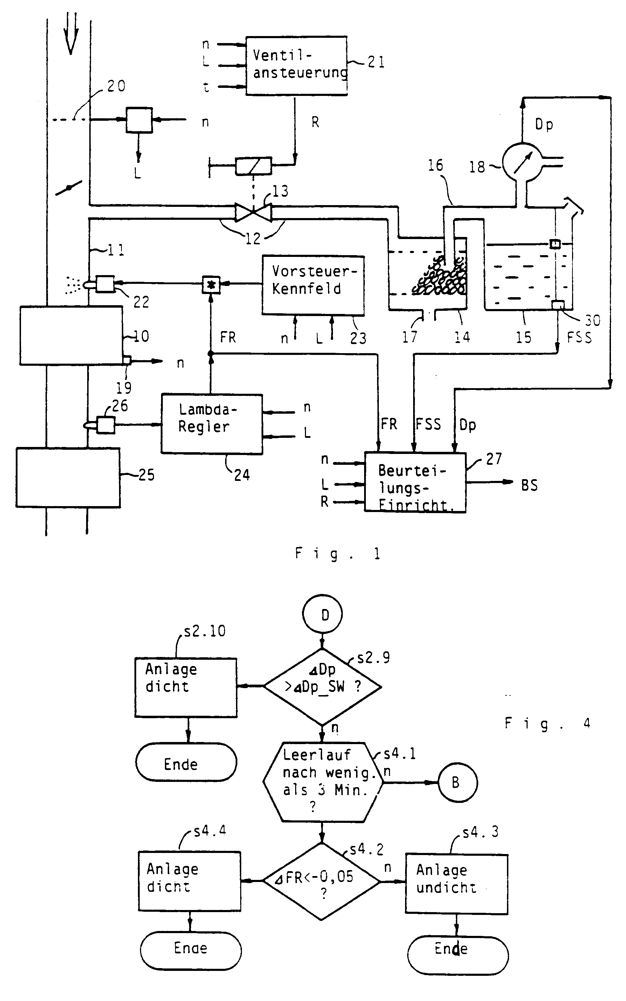

Die in Fig. 1 enthaltene Tankentlüftungsanlage an einem Verbrennungsmotor 10 mit Saugrohr 11 weist eine Verbindungsleitung 12 mit eingesetztem Tankentlüftungsventil 13 zwischen dem Saugrohr 11 und einem Adsorptionsfilter 14 sowie eine von letzterem zu einem Tank 15 führende Anschlußleitung 16 auf. Unten in das Adsorptionsfilter 14 mündet an seiner Belüftungsseite eine Belüftungsleitung 17. Die Anschlußleitung 16 ist ein Stück in die Aktivkohlefüllung 29 des Filters eingetaucht. Dadurch herrscht an ihrer Mündung im wesentlichen noch der saugseitige Druck, wie er über die Verbindungsleitung vom Tankentlüftungsventil her übertragen wird, jedoch besteht eine gute Adsorptionswirkung für eine plötzlich auftretende große Kraftstoffdampfmenge, was z. B. bei einer Erschütterung des Tanks der Fall ist. Dies ermöglicht zuverlässige Druckmessungen mit Hilfe eines Differenzdruckfühlers 18 am Tank, ohne daß die Fahreigenschaften des Motors durch plötzlich auftretende große Kraftstoffdampfmengen aus der Tankentlüftung beeinträchtigt werden.

Am Motor 10 ist ein Drehzahlmesser 19 zum Bestimmen der Drehzahl n desselben vorhanden. Im Saugrohr 11 befindet sich ein Luftmassenmesser 20 zum Erfassen der in den Motor strömenden Luftmasse. Der Luftmassenmesser liefert ein Lastsignal L, das zusammen mit der Drehzahl n zum Bestimmen des Betriebszustandes des Motors 10 dient. Der Betriebszustand hängt weiterhin von der Zeit t ab, nämlich dahingehend, daß bei einer Grundausführungsform in einem festen Zeitraster abwechselnd ein Betrieb mit bzw. ohne Tankentlüftung stattfindet.

Für den Betrieb mit bzw. ohne Tankentlüftung wird das Tankentlüftungsventil 13 von einer Ansteuereinrichtung 21 in bekannter Weise so angesteuert, daß für jeden Betriebszustand des Motors ein zugehöriges Tastverhältnis des Ventils eingestellt wird.

Kraftstoff wird dem Motor 10 über eine Kraftstoffzumeßeinrichtung 22 zugemessen, die mit Hilfe von Werten aus einer Kraftstoffzumeß-Vorsteuerung vorgesteuert und mit Hilfe eines Lambdaregelfaktors FR und Adaptionswerten, die mit den Vorsteuerwerten verknüpft werden, geregelt wird. In Fig. 1 sind die Adaptionsgrößen nicht veranschaulicht, sondern es ist nur eine multiplikative Verknüpfung des Regelfaktors FR von einem Lambdaregler 24 mit den Vorsteuerwerten dargestellt. Der Lambdaregler 24 erhält unter anderem in bekannter Weise ein Signal von einer vor einem Katalysator 25 angeordneten Lambdasonde 26.

Eine Beurteilungseinrichtung 27 erhält die Signale zur Drehzahl n, zur Last L und zum Tastverhältnis R des Tankentlüftungsventils, um aus diesen Größen den Betriebszustand des Motors und des Tankentlüftungsventils zu erkennen. Weiterhin werden ihr der Regelfaktor FR und das Signal Dp vom Differenzdruckfühler 18 zugeführt. Schließlich erhält sie noch ein Füllstandssignal FSS von einem Füllstandssensor 30 im Tank 15.

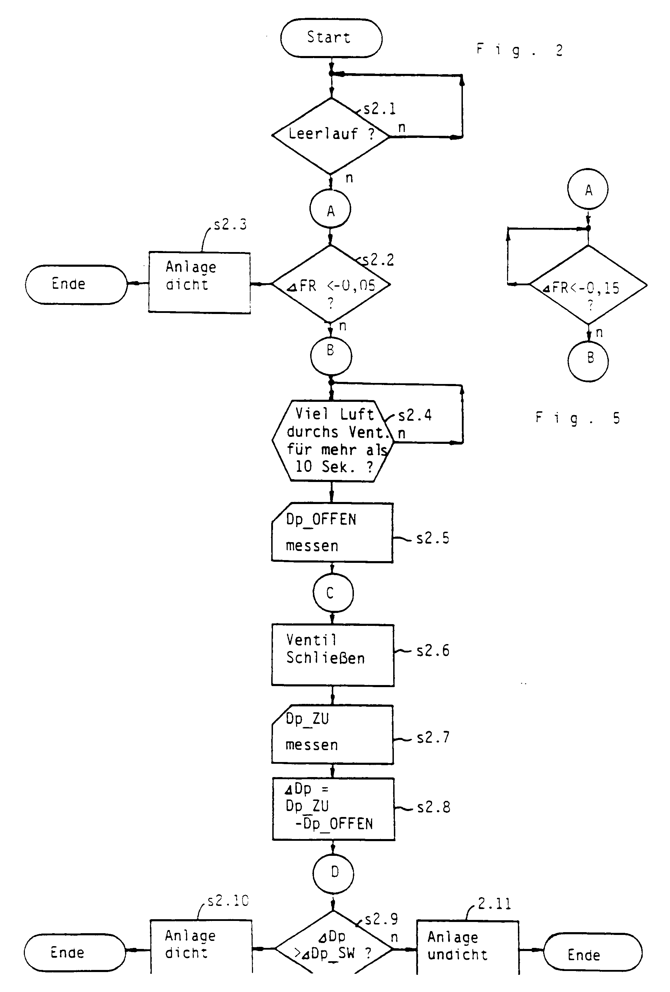

Diese Beurteilungseinrichtung 27 führt ein erfindungsgemäßes Verfahren zum Überprüfen und Beurteilen der Funktionsfähigkeit der Tankentlüftungsanlage aus. Ein erstes Beispiel hierfür wird nun anhand des Flußdiagramms von Fig. 2 erläutert.

Gemäß dem Flußdiagramm von Fig. 2 wird in einem ersten Schritt s2.1 nach dem Start des Verfahrens überprüft, ob der Motor im Leerlauf betrieben wird. Dies ist ein für eine Magerkorrekturprüfung bevorzugter Betriebszustand mit niedrigem Luftdurchsatz durch den Motor. Dieser Schritt wird so lange ausgeführt, bis das Vorliegen von Leerlauf festgestellt wird. Ist dies der Fall, wird nach Durchlaufen einer Marke A überprüft, ob die tiefpaßgefilterte Regelfaktordifferenz ΔFR < -0.05 ist (Schritt s2.2). Hierzu wird eine vorgegebene Zeitspanne, z.B. 2 sec, nach Erreichen des Leerlaufzustandes das Tankentlüftungsventil ausgehend vom geschlossenen Zustand mit zunehmendem Tastverhältnis geöffnet und es wird die Differenz zwischen den Regelfaktoren bei geschlossenem und aufgetastetem Tankentlüftungsventil bestimmt. Ist die Bedingung erfüllt, wird die Anlage in einem Schritt s2.3 als funktionsfähig beurteilt, und das Verfahren wird beendet. Häufig wird das Verfahren nur bis zu diesem Schritt laufen, was den Vorteil hat, daß der im folgenden beschriebene Zyklus, der in das Tankentlüftungsgeschehen eingreift, nur in seltenen Fällen abgearbeitet werden muß. Es sei an dieser Stelle angemerkt, daß die hier beschriebenen Prüfverfahren typischerweise während jedes Fahrzyklus eines Fahrzeugs nur einmal ausgeführt werden.

Kann in Schritt s2.2 keine Magerkorrektur festgestellt werden, wird überprüft (Schritt s2.4, der über eine Marke B erreicht wird), ob hoher Luftdurchsatz durchs Tankentlüftungsventil für mehr als 10 Sekunden vorlag. Hoher Luftdurchsatz durchs Tankentlüftungsventil führt zu hohen Unterdrücken und damit guten Druckänderungs-Prüfbedingungen für den Druck im Tank. Derartige Luftdurchsätze treten bei mittleren und hohen Lasten des Verbrennungsmotors auf. Bei niederen Lasten, also insbesondere im Leerlauf, muß das Tastverhältnis des Tankentlüftungsventils so gewählt werden, daß kaum Luft durch es hindurchtritt, um den Leerlaufbetrieb nicht zu stören, während bei Vollast nur ein schwacher Unterdruck vom Saugrohr her übertragen wird, weswegen auch bei diesem Zustand trotz dauernd geöffnetem Tankentlüftungsventil nur noch kleine Luftdurchsätze durch dieses Ventil und damit geringe Unterdrücke im Tank erzielt werden. Die Zeitdauer von 10 Sekunden wird als Unterdruck-Aufbau-Zeitspanne abgewartet.

Solange die Bedingung von Schritt s2.4 nicht erfüllt ist, wird dieser Schritt wiederholt. Andernfalls wird der Folgeschritt s2.5 erreicht, in dem der Differenzdruck Dp_OFFEN gemessen wird, d. h. der Differenzdruck im Tank bei offenem Tankentlüftungsventil. Nachdem dieser Druck erfaßt wurde, wird das Ventil geschlossen (Schritt s2.6, der über eine Marke C erreicht wird), und nach einer Unterdruck-Abbau-Zeitspanne Δt_ZU wird der Differenzdruck Dp_ZU gemessen, d. h. der Differenzdruck im Tank gegenüber dem Umgebungsdruck bei geschlossenem Ventil (Schritt s2.7). Mit Hilfe der beiden gemessenen Drücke wird die Differenzdruckänderung ΔDp berechnet (Schritt s2.8), und nach Durchlaufen einer Marke D wird überprüft (Schritt s2.9), ob diese Differenzdruckänderung größer ist als ein Schwellwert ΔDp_SW. Ist dies der Fall, wird die Anlage als funktionsfähig beurteilt (Schritt s2.10), während andernfalls die Anlage als nicht funktionsfähig beurteilt wird (Schritt s2.11). In beiden Fällen wird anschließend das Verfahren beendet.

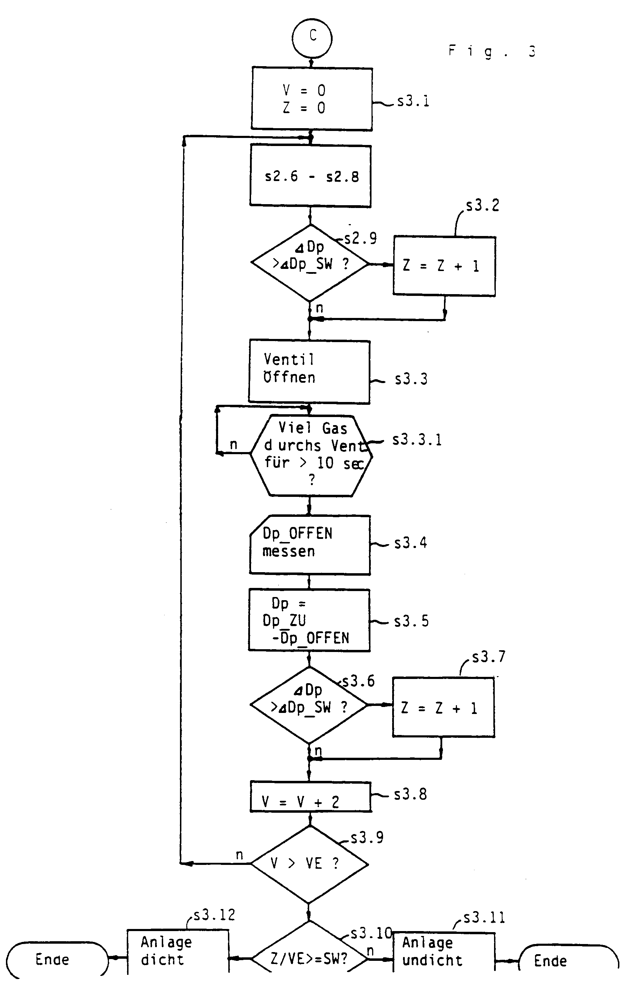

Da beim eben beschriebenen Verfahren die Differenzdruckänderung nur einmal erfaßt wird und dann sogleich eine Aussage über die Funktionsfähigkeit der Anlage getroffen wird, ist es nur an Anlagen ausführbar, bei denen große Differenzdruckänderungen z. B. von 10 mbar oder mehr erwartet werden können. Dies ist jedoch bei den wenigsten Anlagen der Fall. Um die Aussagesicherheit zu steigern, ist es zunächst möglich, den Ablauf der Schritte s2.4 bis s2.9 mehrfach zu durchlaufen, jedesmal das Ergebnis in Schritt s2.9 zu erfassen und erst dann auf Funktionsfähigkeit der Anlage zu schließen, wenn eine vorgegebene Mindestprozentzahl von Fällen überschritten wird, in denen die jeweils gemessene Differenzdruckänderung den vorgegebenen Schwellenwert überschreitet. Noch sicherer sind jedoch Verfahrensvarianten, wie sie nun anhand der Fig. 3 und 4 beschrieben werden.

Der Ablauf gemäß Fig 3 ersetzt den Ablauf von Fig. 2 ab der Marke C. In einem Schritt s3.1 nach der Marke C werden ein Zählwert V für Meßvorgänge und ein Zählwert Z für erfolgreiche Druckänderungsversuche jeweils auf Null gesetzt. Es schließen sich dann die bereits besprochenen Schritte s2.6 bis s2.9 an. Wird in Schritt s2.9 festgestellt, daß die gemessene Differenzdruckänderung über dem vorgegebenen Schwellwert liegt, wird in einem Schritt s3.2 der Zählwert Z um Eins inkrementiert. Anschließend wird ein Schritt s3.3 erreicht, was auch der Fall ist, wenn die Frage in Schritt s2.9 verneint wird. In diesem Schritt s.3.3 wird das Tankentlüftungsventil geöffnet. Sobald für mindestens eine vorgegebenen Zeitspanne, im Beispiel 10 sec, Betriebsbedingungen mit hohem Gasdurchdatz durchs Tankentlüftungsventil vorlagen (Schritt s3.3.1), wird der Differenzdruck Dp-OFFEN gemessen (Schritt s3.4). Es schließen sich Schritte s3.5 und s3.6 an, die den Schritten s2.8 und s2.9 völlig entsprechen, also das Berechnen der Differenzdruckänderung und die Abfrage, ob diese die oben genannte Schwelle überschreitet. Ist letzteres der Fall, wird erneut der Zählwert Z um den Wert Eins Inkrementiert (Schritt s3.7), woraufhin sich, wie auch bei Verneinen der Frage in Schritt s3.6, ein Schritt s3.8 anschließt, in dem der Zählwert V für die Meßvorgänge um den Wert Zwei erhöht wird. Ergibt sich bei einer folgenden Abfrage (Schritt s3.9), daß dieser Zählwert V einen Endwert VE noch nicht erreicht hat, laufen die Schritte ab Schritt s2.6 erneut ab. Andernfalls wird in einem Schritt s3.10 überprüft, ob unter der Gesamtzahl der Druckänderungsmeßvorgänge die vorgegebene Differenzdruckänderungsschwelle mit einem Mindestprozentsatz überschritten wurde, d. h. des wird überprüft, ob der Quotient Z/VE größer oder gleich einem Schwellwert SW ist. Ist dies nicht der Fall, wird die Anlage als nicht funktionsfähig beurteilt (Schritt s3.11), andernfalls wird sie als funktionsfähig beurteilt (Schritt s3.12). Dann endet das Verfahren.

Ganz besonders zuverlässige Aussagen liefert die Verfahrensvariante gemäß Fig. 4. Sie hat darüber hinaus den Vorteil, daß sie mit einer wenig aufwendigen Druckänderungsprüfung auskommt. Dieses Verfahren schließt sich an die Marke D im Ablauf von Fig. 2 an. Es folgt zunächst wieder Schritt s2.9, an den sich ebenfalls wie gehabt Schritt s2.10 anschließt, falls die Differenzdruckänderung ΔDp über dem vorgegebenen Schwellwert liegt. Ist dies jedoch nicht der Fall, wird nicht mehr Schritt s2.11 erreicht, sondern ein neuer Schritt s4.1, in dem untersucht wird, ob innerhalb einer vorgegebenen Zeitspanne, beim Ausführungsbeispiel 3 Minuten, ein Betriebszustand des Motors mit niederem Luftdurchsatz, beim Ausführungsbeispiel Leerlauf, erreicht wird. Ist dies nicht der Fall, folgt das Verfahren von Fig. 2 ab der Marke B. Andernfalls, wenn also Leerlauf vorliegt, wird untersucht (Schritt s4.2), ob vom Lambdaregler eine Magerkorrektur ausgeführt wird, d. h. beim Ausführungsbeispiel wird abgefragt, ob die tiefpaßgefilterte Regelfaktordifferenz ΔFR kleiner ist als -0,05. Ist dies nicht der Fall, wird in einem Schritt s4.3 die Anlage als nicht funktionsfähig beurteilt, andernfalls in einem Schritt s4.4 als funktionsfähig beurteilt.

Diesem Ablauf liegt die Überlegung zugrunde, daß dann, wenn die gemessene Differenzdruckänderung kleiner ist als der vorgegebene Schwellenwert, dies eigentlich nur dadurch bedingt sein kann, daß der Kraftstoff im Tank nach der Messung in Schritt s2.2 zu gasen begonnen hat, was z. B. aufgrund einer plötzlichen Tankerschütterung der Fall sein kann. Der verdampfte Kraftstoff muß dann bei einer Magerkorrekturmessung bei Leerlauf festgestellt werden können, da er aufgrund des in Schritt s2.6 geschlossenen Tankentlüftungsventils noch im Adsorptionsfilter vorhanden sein muß. Da wegen des geschlossenen Tankentlüftungsventils in der Wartezeit gemäß Schritt s4.1 auf das Erreichen von Leerlauf keine Tankentlüftung stattfindet, wird nach Ablauf der genannten vorgegebenen Zeitspanne wieder die Marke B erreicht, mit dem anschließenden Schritt s2.4 des Untersuchens, ob hoher Luftdurchsatz durch das Tankentlüftungsventil für mehr als 10 Sekunden auftrat. Dieser Schritt setzt ein offenes Tankentlüftungsventil voraus.

Sobald das Tankentlüftungsventil geschlossen wird, ist es grundsätzlich von Vorteil, direkt eine Grundadaptionsphase, abweichend vom üblichen festen Takt, zu starten, mit dem sich ansonsten Tankentlüftungsphasen und Grundadaptionsphasen abwechseln. Diese Vorgehensweise ist prinzipiell in einer älteren Anmeldung (DE-A-41 09 401) beschrieben.

Während die eben genannte Zeitspanne beim Ausführungsbeispiel von Fig. 2 mit 10 Sekunden vorgegeben ist und derselbe Wert auch für die Unterdruck-Abbau-Zeitspanne Δt_ZU verwendet ist, ist es von Vorteil, diese Zeitspanne abhängig vom Füllstand des Tanks zu wählen, falls das System über ein Füllstandssignal verfügt. Bei fast vollem Tank wird sich nämlich ein Druckgleichgewicht sehr viel schneller einstellen als bei fast leerem Tank. Ist das Signal von einem Füllstandssensor nicht nutzbar, wird man sicherheitshalber die für einen im wesentlichen leeren Tank gültige Zeitspanne vorgeben. Dies sind die 10 Sekunden des Ausführungsbeispiels.

Bei der vorstehend beschriebenen Vorgehensweise erscheint es zunächst als kritisch, daß durch Schließen des Tankentlüftungsventils in das Tankentlüftungsgeschehen eingegriffen wird. Es ist jedoch zu beachten, daß dies nur dann der Fall ist, wenn in Schritt s2.2 festgestellt wurde, daß keine Magerkorrektur erforderlich war. Dies zeigt aber an, daß nur wenig Kraftstoff verdampft. In diesem Fall ist es unerheblich, wenn das Tankentlüftungsventil zur Druckmessung willkürlich geschlossen wird, da es unwahrscheinlich ist, daß kräftige Tankentlüftung erforderlich werden wird.

Die eben genannte Tatsache ermöglicht auch den nun anhand von Fig. 5 beschriebenen Ablauf, der die Entscheidung auf Funktionsfähigkeit der Tankentlüftungsanlage grundsätzlich mit Hilfe der Druckdifferenzprüfung fällt. Zwischen den Marken A und B wird wieder gefragt, ob die tiefpaßgefilterte Regelfaktordifferenz ΔFR kleiner ist als ein vorgegebener Wert, hier -0,15. Diese Abfrage wird solange wiederholt, bis die Frage verneint wird, d.h., bis feststeht, daß nur so wenig Kraftstoff zu regenerieren ist, daß eine Druckdifferenzprüfung ohne merkbare Folgen auf den Regenerierprozess ausgeführt werden kann. Es folgen dann die Schritte ab der Marke B in Fig. 2, falls zweckmäßig auch mit den Änderungen, wie sie anhand der Figuren 3 und 4 erläutert wurden. Wird in der Druckdifferenzprüfung die Differenzmessung mehrfach wiederholt (Fig. 3), kann es von Vorteil sein, in vorgegebenen Zeitabständen mit Hilfe einer Magerkorrekturprüfung zu untersuchen, ob nach wie vor ohne merkbare Folgen auf die Kraftstoffregenerierung in das Regeneriergeschehen eingegriffen werden kann.

Bei den vorigen Ausführungsbeispielen wurde der Differenzdruck Dp OFFEN mit Ablauf einer Unterdruck-Aufbau-Zeitspanne gemessen. Es ist jedoch auch möglich, währen der genannten Zeitspanne den Differenzdruck dauernd zu messen und den jeweils tiefsten Wert als maßgeblichen Differenzdruck zu speichern.

## Patentansprüche

1. Verfahren zum Überprüfen der Funktionsfähigkeit einer Tankentlüftungsanlage für ein Kraftfahrzeug mit einem Verbrennungsmotor (10) mit Lambdaregler (24), welcher die über eine Kraftstoffzumeßeinrichtung (22) fließende Kraftstoffmenge beeinflußt, welche Anlage ein Adsorptionsfilter (14) mit einer Anschlußleitung (16) zu einem Tank (15) und einer Verbindungsleitung (12) mit eingesetztem Tankentlüftungsventil (13) zum Saugrohr (11) des Motors sowie ein Mittel (18) zum Erfassen des Druckes im Tank aufweist, dadurch gekennzeichnet, daß bei einem Betriebszustand mit niedrigem Luftdurchsatz durch den Motor geprüft wird, ob der Lambdaregler (24) auf eine zusätzliche Kraftstoffmenge, die als Folge einer Öffnung des Tankentlüftungsventils (13) auftritt, mit einer ein vorbestimmtes Maß überschreitenden Magerkorrektur (Δ FR) reagiert, d.h. mit einer Reduzierung der über die Kraftstoffzumeßeinrichtung (22) fließenden Kraftstoffmenge, und daß dann, wenn diese Magerkorrektur (Δ FR) ein vorbestimmtes Maß (Δ FR-SW) überschreitet, die Tankentlüftungsanlage als funktionsfähig beurteilt wird und dann, wenn die Magerkorrektur (Δ FR) das vorbestimmte Maß (Δ FR-SW) nicht überschreitet, in einem Betriebszustand mit hohem Gasdurchsatz durch das Tankentlüftungsventil (13) der Druck im Tank (15) bei offenem und geschlossenem Tankentlüftungsventil (13) erfaßt wird und daß die Tankentlüftungsanlage dann als funktionsfähig beurteilt wird, wenn die Differenz der genannten Drücke einen vorbestimmten Schwellwert (Δ Dp-SW) überschreitet.

2. Verfahren nach Anspruch 1, **dadurch gekennzeichnet**, daß die Tankentlüftungsanlage als funktionsfähig beurteilt wird, wenn die Lambdaregler-Magerkorrektur größer ist als der Magerkorrektur-Schwellwert (ΔFR > ΔFR_SW).

3. Verfahren nach einem der Ansprüche 1 oder 2, **dadurch gekennzeichnet,** daß bei der Druckänderungsprüfung der Tankdruck bei offenem Tankentlüftungsventil erst dann gemessen wird, wenn hoher Luftdurchsatz durch das Tankentlüftungsventil für eine vorgegebene Unterdruck-Aufbau-Zeitspanne (Δt_OFFEN) vorhanden war, dann das Tankentlüftungsventil geschlossen wird und der Tankdruck bei geschlossenem Tankentlüftungsventil erst dann gemessen wird, wenn ab dem Schließzeitpunkt eine vorgegebene Unterdruck-Abbau-Zeitspanne (Δt_ZU) verstrichen ist und als Druckänderung die Differenz zwischen den genannten beiden Drücken verwendet wird.

4. Verfahren nach Anspruch 3, **dadurch gekennzeichnet**, daß die Zeitspannen abhängig vom Füllstand des Tanks so gewählt werden, daß sie bei vollem Tank minimal und bei leerem Tank maximal sind.

5. Verfahren nach einem der Ansprüche 3 oder 4, **dadurch gekennzeichnet,** daß dann, wenn keine Druckänderung um mindestens den vorgegebenen Schwellwert festgestellt wird, die Anlage als nicht funktionsfähig beurteilt wird.

6. Verfahren nach einem der Ansprüche 3 oder 4, **dadurch gekennzeichnet**, daß dann, wenn keine Druckänderung um mindestens den vorgegebenen Schwellwert festgestellt wird, das Tankentlüftungsventil geschlossen wird und überprüft wird, ob innerhalb einer vorgegebenen Zeitspanne ein Betriebszustand mit niederem Luftdurchsatz durch den Motor auftritt und dann, wenn dies nicht der Fall ist, die Druckprüfung wiederholt wird, andernfalls geprüft wird, ob ausgehend vom geschlossenen zum zunehmend geöffneten Tankentlüftungsventil vom Lambdaregler eine Magerkorrektur vorgenommen wird, und dann, wenn dies der Fall ist, die Anlage als funktonsfähig, andernfalls als nicht funktionsfähig beurteilt wird.

7. Verfahren nach einem der Ansprüche 1 bis 4, **dadurch gekennzeichnet,** daß die Druckänderungsprüfung darin besteht, daß mindestens einmal das Tankentlüftungsventil geschlossen wird und überprüft wird, ob die dabei auftretende Tankdruckänderung einen Änderungsschwellwert (ΔDp_SW) überschreitet, dann das Tankentlüftungsventil wieder geöffnet wird und überprüft wird, ob die dabei auftretende Tankdruckänderung den Änderungsschwellwert überschreitet, und die Anlage als funktionsfähig beurteilt wird, wenn eine vorgegebene Anzahl von Überschreitungen des Änderungsschwellwertes unter einer vorgegebenen Anzahl von Umschaltvorgängen des Tankentlüftungsventils überschritten wird, andernfalls die Anlage als nicht funktionsfähig beurteilt wird.

8. Verfahren nach einem der Ansprüche 1 bis 7, **dadurch gekennzeichnet**, daß dann, wenn während der Druckänderungsprüfung vom Lambdaregler eine Magerkorrektur vorgenommen wird, diese Prüfung abgebrochen und die Anlage als funktionsfähig beurteilt wird.

9. Verfahren nach einem der Ansprüche 1 bis 8, **dadurch gekennzeichnet,** daß als Tankdruck der Differenzdruck (Dp) zwischen dem Tankinnendruck und dem Umgebungsdruck verwendet wird.

10. Vorrichtung zum Überprüfen der Funktionsfähigkeit einer Tankentlüftungsanlage für ein Kraftfahrzeug mit einem Verbrennungsmotor (10) mit Lambdaregler (24), welcher die über eine Kraftstoffzumeßeinrichtung (22) fließende Kraftstoffmenge beeinflußt, welche Anlage ein Adsorptionsfilter (14) mit einer Anschlußleitung (16) zu einem Tank (15) und einer Verbindungsleitung (12) mit eingesetztem Tankentlüftungsventil (13) zum Saugrohr (11) des Motors sowie ein Mittel (18) zum Erfassen des Druckes im Tank (15) aufweist, dadurch gekennzeichnet, daß sie so ausgebildet ist, daß sie bei einem Betriebszustand mit niedrigem Luftdurchsatz durch den Motor prüft, ob der Lambdaregler (24) auf eine zusätzliche Kraftstoffmenge, die als Folge einer Öffnung des Tankentlüftungsventils (13) auftritt, mit einer ein vorbestimmtes Maß überschreitenden Magerkorrektur (Δ FR) reagiert, d.h. mit einer Reduzierung der über die Kraftstoffzumeßeinrichtung (22) fließenden Kraftstoffmenge,
und daß sie dann, wenn diese Magerkorrektur (Δ FR) ein vorbestimmtes Maß (Δ FR-SW) überschreitet, die Tankentlüftungsanlage als funktionsfähig beurteilt und dann, wenn die Magerkorrektur (Δ FR) das vorbestimmte Maß (Δ FR-SW) nicht überschreitet, in einem Betriebszustand mit hohem Gasdurchsatz durch das Tankentlüftungsventil (13) der Druck im Tank (15) bei offenem und geschlossenem Tankentlüftungsventil (13) erfaßt und daß sie die Tankentlüftungsanlage dann als funktionsfähig beurteilt wird, wenn die Differenz der genannten Drücke einen vorbestimmten Schwellwert (Δ Dp-SW) überschreitet.

## Claims

1. Process for checking the ability to function of a tank venting system for a motor vehicle having an internal combustion engine (10) with a lambda controller (24) which influences the amount of fuel flowing via a fuel metering device (22), which system has an adsorption filter (14) with a connection line (16) leading to a tank (15) and a connecting line (12) with an inserted tank venting valve (13) leading to the intake pipe (11) of the engine as well as a means (18) for recording the pressure in the tank (15), characterised in that, given an operating condition with a low air flow through the engine, a check is carried out to determine whether the lambda controller (24) responds to an additional fuel quantity, which occurs as a consequence of the opening of the tank venting valve (13), with a lean correction (ΔFR), i.e. with a reduction in the fuel quantity flowing via the fuel metering device (22), which exceeds a predetermined amount, and in that if this lean correction (γFR) exceeds a predetermined amount (ΔFR_SW) the tank venting system is judged to be functional and if the lean correction (ΔFR) does not exceed the predetermined amount (ΔFR_SW), the pressure in the tank (15) is recorded with the tank venting valve (13) open and closed in an operating condition with a high gas flow through the tank venting valve (13), and in that the tank venting system is judged to be functional if the difference between the said pressures exceeds a predetermined threshold value (ΔDp_SW).

2. Process according to Claim 1, characterised in that the tank venting system is judged to be functional if the lean correction by the lambda controller is greater than the lean correction threshold value (ΔFR > ΔFR_SW).

3. Process according to either of Claims 1 or 2, characterised in that, in the pressure change test, the tank pressure with the tank venting valve open is only measured if a high air flow through the tank venting valve has been present for a predetermined vacuum build-up period (Δt_OPEN), the tank venting valve is then closed, and the tank pressure with the tank venting valve closed is only measured when a predetermined vacuum release time period (Δt_CLOSED) has passed since the time of closing, and the difference between the said two pressures is used as the pressure change.

4. Process according to Claim 3, characterised in that the time periods are chosen as a function of the filling level of the tank in such a way that, with the tank full, they are at a minimum and, with the tank empty, they are at a maximum.

5. Process according to either of Claims 3 and 4, characterised in that when no pressure change by at least the predetermined threshold value is detected, the system is judged to be nonfunctional.

6. Process according to either of Claims 3 or 4, characterised in that if no pressure change by at least the predetermined threshold value is detected, the tank venting valve is closed and a check is carried out to determine whether an operating condition with a low air flow through the engine occurs within a predetermined time period and, if this is not the case, the pressure test is repeated whereas otherwise a test is carried out to determine whether starting with the tank venting valve closed and with the tank venting valve increasingly open, a lean correction is performed by the lambda controller and if this is the case, the system is judged to be functional whereas, otherwise, it is judged to be nonfunctional.

7. Process according to one of Claims 1 to 4, characterised in that the pressure change test consists in that the tank venting valve is closed at least once and a check is carried out to determine whether the tank pressure change which occurs exceeds a change threshold value (ΔDp_SW), then the tank venting valve is opened again and a check is carried out to determine whether the tank pressure change which occurs exceeds the change threshold valve and the system is judged to be functional if a predetermined number of overshoots of the change threshold value from a predetermined number of switch- over operations of the tank venting valve is exceeded and otherwise the system is judged to be nonfunctional.

8. Process according to one of Claims 1 to 7, characterised in that when a lean correction is performed by the lambda controller during the pressure change test, this test is discontinued and the system is judged to be functional.

9. Process according to one of Claims 1 to 8, characterised in that the differential pressure (Dp) between the tank internal pressure and the ambient pressure is used as the tank pressure.

10. Device for checking the ability to function of a tank venting system for a motor vehicle having an internal combustion engine (10) with a lambda controller (24) which influences the amount of fuel flowing via a fuel metering device (22), which system has an adsorption filter (14) with a connection line (16) leading to a tank (15) and a connecting line (12) with an inserted tank venting valve (13) leading to the intake pipe (11) of the engine, as well as a means (18) for recording the pressure in the tank (15), characterised in that it is designed in such a way that, given an operating condition with a low air flow through the engine, it checks whether the lambda controller (24) responds to an additional fuel quantity, which occurs as a consequence of the opening of the tank venting valve (13), with a lean correction (ΔFR), i.e. with a reduction in the fuel quantity flowing via the fuel metering device (22), which exceeds a predetermined amount, and in that, if this lean correction (ΔFR) exceeds a predetermined amount (ΔFR_SW), it judges the tank venting system to be functional and, if the lean correction (ΔFR) does not exceed the predetermined amount (ΔFR_SW), records the pressure in the tank (15) with the tank venting valve (13) open and closed in an operating condition with a high gas flow through the tank venting valve (13), and in that it judges the tank venting system to be functional if the difference between the said pressures exceeds a predetermined threshold value (ΔDp_SW).

## Revendications

1. Procédé de contrôle de l'aptitude au fonctionnement d'une installation de ventilation de réservoir d'un véhicule automobile équipé d'un moteur à combustion interne (10) à régulateur lambda (24) qui influence la quantité de carburant traversant une installation de dosage de carburant (22), cette installation comportant un filtre par adsorption (14) avec une conduite de raccordement (16) à un réservoir (15) et une conduite de liaison (12) équipée d'une soupape de ventilation de réservoir (13) allant vers la tubulure d'aspiration (11) du moteur et un moyen (18) pour détecter la pression dans le réservoir (15), caractérisé en ce que pour un état de fonctionnement à faible débit d'air à travers le moteur, on vérifie si le régulateur lambda (24) réagit à une quantité de carburant supplémentaire qui se produit comme conséquence d'une ouverture de la soupape de ventilation de réservoir (13), avec une correction de mélange maigre (ΔFR) dépassant une valeur prédéterminée, c'est-à-dire avec une réduction de la quantité de carburant traversant l'installation de dosage de carburant (22) et en ce que si la correction de mélange maigre (ΔFR) dépasse une valeur prédéterminée (ΔFR-SW), l'installation de ventilation du réservoir est considérée comme apte à fonctionner et si la correction de mélange maigre (ΔFR) ne dépasse pas la mesure prédéterminée (ΔFR-SW), dans un état de fonctionnement à fort débit de gaz à travers la soupape de ventilation de réservoir (13), on détecte la pression dans le réservoir (15) lorsque la soupape de ventilation du réservoir est ouverte et lorsqu'elle est fermée et on estime que l'installation de ventilation de réservoir est apte à fonctionner si la différence des pressions ci-dessus dépasse un seuil prédéterminé (ΔDp-SW).

2. Procédé selon la revendication 1, caractérisé en ce que l'installation de ventilation de réservoir est considérée comme apte à fonctionner si la correction de mélange maigre du régulateur lambda dépasse le seuil de correction de mélange pauvre (ΔFR > ΔFR_SW).

3. Procédé selon l'une des revendications 1 ou 2, caractérisé en ce que pour un contrôle de variation de pression, on mesure seulement la pression du réservoir avec la soupape de ventilation de réservoir ouverte s'il y a eu un débit élevé d'air à travers la soupape de ventilation du réservoir pour une période de diminution de dépression, prédéterminée (Δt-OUVERT), puis on ferme la soupape de ventilation du réservoir et on mesure la pression du réservoir lorsque la soupape de ventilation du réservoir est fermée seulement si à partir de l'instant de la fermeture, il s'est passé une période de temps (Δt-FERME) de diminution de dépression, prédéterminée et on utilise comme variation de pression, la différence entre les deux pressions ci-dessus.

4. Procédé selon la revendication 3, caractérisé en ce que les intervalles de temps sont choisis indépendamment de l'état de remplissage du réservoir pour être au minimum lorsque le réservoir est plein et au maximum lorsque le réservoir est vide.

5. Procédé selon l'une des revendications 3 ou 4, caractérisé en ce que lorsque l'on ne constate aucune variation de pression au moins du seuil prédéterminé, on estime que l'installation n'est pas apte à fonctionner.

6. Procédé selon l'une des revendications 3 ou 4, caractérisé en ce que lorsqu'on ne constante aucune variation de pression au minimum de la valeur de seuil prédéterminée, on ferme la soupape de ventilation du réservoir et on vérifie si à l'intérieur d'une période prédéterminée, il y a eu un état de fonctionnement à faible débit d'air à travers le moteur et dans la négative, on repère le contrôle de pression et dans l'affirmative, on vérifie si, partant de la soupape de ventilation de réservoir, fermée, et s'ouvrant progressivement, le régulateur lambda a effectué une correction de mélange pauvre et si cela est le cas, on estime que l'installation est apte à fonctionner ; au cas contraire, on estime qu'elle n'est pas apte à fonctionner.

7. Procédé selon l'une des revendications 1 à 4, caractérisé en ce que le contrôle de variation de pression consiste à fermer au moins une fois la soupape de ventilation du réservoir et à vérifier si la variation de pression de réservoir qui se produit dépasse un seuil de variation (ΔDp_SW), puis on ouvre de nouveau la soupape de ventilation et on vérifie si la variation de pression de réservoir qui se produit dépasse le seuil de variation et on estime que l'installation est apte à fonctionner si un nombre prédéterminé de dépassements du seuil de variation est dépassé pour un nombre prédéterminé de commutations de la soupape de ventilation et au cas contraire, on estime que l'installation n'est pas apte à fonctionner.

8. Procédé selon l'une des revendications 1 à 7, caractérisé en ce que si pendant le contrôle de variation de pression par le régulateur lambda, on effectue une correction de mélange pauvre, on arrête ce contrôle et on estime que l'installation est apte à fonctionner.

9. Procédé selon l'une des revendications 1 à 8, caractérisé en ce que comme pression du réservoir, on utilise la pression différentielle (Dp) entre la pression interne au réservoir et la pression ambiante.

10. Dispositif de contrôle de l'aptitude au fonctionnement d'une installation de ventilation de réservoir d'un véhicule automobile équipé d'un moteur à combustion interne (10) avec un régulateur lambda (24) qui influence la quantité de carburant passant par une installation de dosage de carburant (22), cette installation comprenant un filtre par adsorption (14) comprenant une conduite de branchement (16) à un réservoir (15) et une conduite de liaison (12) équipée d'une soupape de ventilation de réservoir (13) vers la tubulure d'aspiration (11) du moteur ainsi qu'un moyen (18) pour détecter la pression dans le réservoir (15), caractérisé en ce que ce dispositif est réalisé pour que dans le cas d'un état de fonctionnement à faible débit d'air à travers le moteur, il vérifie si le régulateur lambda (24) réagit à une quantité de carburant supplémentaire, conséquence d'une ouverture de la soupape de ventilation de réservoir (13) par une correction de mélange pauvre dépassant une mesure prédéterminée (ΔFR) c'est-à-dire par une réduction de la quantité de carburant passant par l'installation de dosage de carburant (22) et en ce que lorsque la correction de mélange pauvre(ΔFR) dépasse une certaine mesure (ΔFR-SW), l'installation de ventilation de réservoir est considérée comme apte à fonctionner et si la correction de mélange pauvre (ΔFR) ne dépasse pas la mesure prédéterminée (ΔFR-SW) dans un état de fonctionnement à débit de gaz élevé à travers la soupape de ventilation de réservoir (13), on détecte la pression dans le réservoir (15) lorsque la soupape de ventilation de réservoir (13) est ouverte et lorsqu'elle est fermée et on estime que l'installation de ventilation de réservoir est apte à fonctionner si la différence des pressions ci-dessus dépasse un seuil (ΔDp-SW) prédéterminé.
